# EUROPÄISCHE PATENTSCHRIFT

(11) **EP 0 843 180 B1**
(45) Veröffentlichungstag und Bekanntmachung des Hinweises auf die Patenterteilung: **01.08.2001**
(21) Anmeldenummer: 97116392.8
(22) Anmeldetag: 19.09.1997
(51) Int. Cl.: G01S 7/497

(54) **Laserabstandsermittlungsvorrichtung**
Distance measurement by laser
Télémétrie

(30) Priorität: 14.11.1996 DE 19647152
(43) Veröffentlichungstag der Anmeldung: 20.05.1998
(73) Patentinhaber: Sick AG, 79183 Waldkirch, Breisgau (DE)
(72) Erfinder: Damm, Hartmut, 79331 Teningen (DE)
(74) Vertreter: Pellkofer, Dieter Dr.

(56) Entgegenhaltungen:
- DE-A- 2 536 878
- DE-A- 2 536 903
- DE-C- 4 341 080

## Beschreibung

Die Erfindung betrifft eine Laserabstandsermittlungsvorrichtung mit einem Impulslaser, einer Lichtablenkeinrichtung, einer Photoempfangsanordnung und einem in definiertem Abstand von der Lichtablenkeinheit angeordneten Referenzobjekt. Sie betrifft ferner ein Referenzobjekt für eine solche Laserabstandsermittlungsvorrichtung.

Bei einer Laserabstandsermittlungsvorrichtung der eingangs genannten Art werden von einem in einem Meßbereich befindlichen Objekt zurückgeworfene Lichtimpulse von der Photoempfangsanordnung empfangen, um daraufhin nach dem Impulslaufzeitverfahren aus der Zeit zwischen dem Aussenden und dem Empfang eines Lichtimpulses unter Berücksichtigung der Lichtgeschwindigkeit ein für den Abstand des Objektes von der Lichtablenkeinrichtung repräsentatives Abtastsignal zu ermitteln. Aufgrund der Signaldynamik können nun aber Laufzeitmeßfehler auftreten. Diese sind u. a. darauf zurückzuführen, daß der Pegel des jeweiligen empfangenen Lichtimpulses eine bestimmte Schaltschwelle überschreiten muß, bevor die jeweils verwendete Zeitmeßeinheit gestoppt wird, und daß der Zeitpunkt des Überschreitens der Schwelle von der Flankensteilheit des empfangenen Lichtimpulses abhängig ist, die insbesondere wiederum von der jeweiligen Impulsamplitude abhängt. Zur Kompensation der Laufzeitmeßfehler kann nun beispielsweise die Amplitude des empfangenen Lichtimpulses gemessen und einer zuvor erstellten Korrekturtabelle ein entsprechender Korrekturwert entnommen werden. Eine solche Korrekturtabelle kann unter Verwendung des Referenzobjekts erstellt werden, nachdem diese in einem definierten Abstand von der Lichtablenkeinheit angeordnet ist.

Bei einem aus der DE 43 40 756 A1 bekannten Laserradar, bei dem die Kompensation der aufgrund der Signaldynamik auftretenden Laufzeitmeßfehler in Abhängigkeit von dem gemessenen Spitzenwert des empfangenen Lichtimpulses erfolgt, kann mit dem verwendeten Referenzobjekt nur eine bestimmte Amplitude simuliert werden kann. Ein weiterer Nachteil besteht darin, daß mit der Verwendung eines streuenden Referenzobjekts dessen Abstand zur Empfangsoptik relativ gering ist. Ein paralleler Einfall des von der Photoempfangsanordnung zu empfangenden Lichtes ist damit nicht möglich, so daß auch kein im unendlichen liegendes Referenzobjekt simuliert werden kann. Da das Referenzobjekt in der Regel im Gerät integriert sein soll, ist der Abstand zur Empfangsoptik etwa gleich der einbis dreifachen Brennweite dieser Empfangsoptik. Zudem ist bei Autokollimationsoptiken mit Mittenabschattung kein direkter Strahlengang durch die Empfangsoptik zurück zur Empfangsanordnung möglich. Das Licht gelangt stets erst nach einer im Tubus zwischen der Empfangsoptik und dem Empfänger auftretenden Mehrfachstreuung zu dem Empfänger. Die vom Licht zurückgelegte Weglänge ist damit praktisch undefiniert. Demzufolge ist auch eine genaue Eichung des Meßsystems nicht möglich.

Bei einer aus der DE 43 41 080 C1 bekannten optischen Abtastvorrichtung ist ein Referenzobjekt mit zwei in einem Winkel von 90° zueinander stehenden kegeligen Spiegelflächen vorgesehen. Diese sind konzentrisch um ein als Ablenkeinrichtung dienendes Spiegelrad angeordnet. Der vom Sender stammende Lichtstrahnl wird zweimal um 90° umgelegt und parallel versetzt, um die Mittenabschattung der vorgesehenen Autokollimationsoptik zu umgehen. Die Dämpfung des Lichtstrahls wird durch vor oder zwischen den Flächen angeordnete Blenden bewirkt. Eine der Flächen kann auch als Teilfläche ausgebildet sein. Es wird stets nur ein bestimmter Teil des Lichtes durch geometrische Teilung zurückgekoppelt. Dies hat nun aber zur Folge, daß bei einer Verwendung von Laserdioden als Lichtsender ein sogenanntes Modenrauschen entsteht. Bei Laserdioden besitzt die abgestrahlte Energie von einem Impuls zum nächsten eine unterschiedliche Ausbreitungsrichtung. Zudem ist das zeitliche Verhalten zwischen dem elektrischen Stromimpuls durch die Laserdiode und dem abgegebenen Lichtimpuls bei den verschiedenen Ausbreitungsmoden unterschiedlich. Damit ist im cm- und mm-Bereich eine genaue Eichung und Korrektur nicht möglich, so daß die Meßgenauigkeit begrenzt ist. Ein weiterer Nachteil besteht darin, daß die kegeligen Flächen in der Ablenkrichtung des Spiegelrades wie ein Hohlspiegel wirken. Somit entsteht ein Zwischenbild zwischen dem Referenzobjekt und dem Spiegelrad. Dieses Zwischenbild wird wieder in einem Bereich zwischen der einfachen und dreifachen Brennweite der Empfangsoptik erzeugt. Es wird somit von der Empfangsoptik hinter dieser Optik in einer Entfernung abgebildet, die etwa der 1,5-fachen Brennweite entspricht. Im Ergebnis wird somit nur ein relativ geringer Teil des Lichtes auf den Empfänger gelenkt. Damit besteht insbesondere auch nicht die Möglichkeit, die maximale Übersteuerung des Empfängers zu simulieren. Darüber hinaus werden die Lichtstrahlen, die nicht direkt auf den Empfänger treffen, in dem die Optik aufnehmenden Tubus mehrfach reflektiert, was wiederum zu fehlerhaften Meßwerten führt. Aufgrund der Verwendung von zwei unter 90° zueinander angeordneten Spiegelflächen muß das Referenzobjekt zudem genau justiert werden. In den Fällen, in denen ein Teil des Strahlenquerschnittes durch Verwendung einer Blende ausgeblendet wird, kann auch keine vollständige Modenmischung erreicht werden.

Bei einem aus der DE-A-25 36 878 bekannten optronischen System mit einem zu justierenden Laserentfernungsmesser wird ein Tripelspiegel als Referenzelement verwendet, das in Verbindung mit einem Tripelstreifen dazu dient, eine optische Brücke zwischen einer Empfangs- oder Visieroptik und einer die optische Bezugsachse des Systems festlegenden Meßoptik herzustellen.

Ziel der Erfindung ist es, eine Laserabstandsermittlungsvorrichtung sowie ein Referenzobjekt der eingangs genannten Art zu schaffen, die bei minimalem Aufwand eine erhöhte Genauigkeit der Referenzmessungen und damit eine möglichst optimale Kompensation der aufgrund der Signaldynamik auftretenden Laufzeitmeßfehler gewährleisten.

Die Aufgabe wird nach der Erfindung durch die kennzeichnenden Merkmale des Anspruchs 1 bzw.15 gelöst.

Aufgrund dieser Ausbildung wird zunächst erreicht, daß das vom Impulslaser stammende Licht zu sich parallel versetzt zurückgeworfen wird, ohne daß dabei irgendein Zwischenbild erzeugt wird. Jedes Tripelelement aus den drei im Winkel von 90° zueinander angeordneten Spiegelflächen stellt eine Art Negativform eines Tripelreflektors dar. Das von dem Referenzobjekt stammende, von der Photoempfangsanordnung empfangene Licht kann nun parallel einfallen, so daß ein im unendlichen liegendes Referenzobjekt simuliert wird. Die vom Referenzobjekt stammenden empfangenen Strahlen können somit direkt auf den verwendeten Photoempfänger fokussiert werden. Der aus dem Unendlichen kommende Referenzlichtstrahl bringt somit den Vorteil eines scharfen Bildes im Brennpunkt mit sich. Zudem ist die optische Weglänge innerhalb des Tripelelements unabhängig vom Einfallswinkel und auch unabhängig vom Einfallsort des von dem Impulslaser stammenden Sende-Impulslichtbündels. Entsprechend ist auch die sich insgesamt ergebende optische Weglänge zwischen dem Impulslaser und der Photoempfangsanordnung unabhängig vom Einfallswinkel und vom Einfallsort. Der Parallelversatz der Lichtstrahlen hängt nur von dem Einfallsort und der Größe der Tripelelemente ab. Soll der Parallelversatz nicht zu groß werden und sichergestellt sein, daß alle vom Referenzobjekt stammenden Lichtstrahlen auch von der Photoempfangsanordnung empfangen werden, so darf das Referenzobjekt eine bestimmte Größe nicht überschreiten. Anders als bei der Verwendung eines Refernezobjekts mit lediglich zwei unter einem Winkel von 90° zueinander angeordneten Spiegelflächen ist eine genaue Justierung nicht mehr erforderlich.

Beim erfindungsgemäßen Referenzobjekt wird das Licht nach einem Parallelversatz stets genau dahin zurückreflektiert, wo es herkommt. Um über einen möglichst großen Winkelbereich der Photoempfangsanordnung möglichst viele Referenzmessungen durchführen zu können, umfaßt das Referenzobjekt mehrere Tripelelemente, die auf einem zur Drehachse der drehbaren Lichtablenkeinheit konzentrischen Kreisbogen liegen. Bei einem Mehrfachhohltripel sollen insbesondere die innenliegenden Eckpunkte auf einem solchen zur Drehachse der Lichtablenkeinrichtung konzentrischen Kreisbogen liegen.

Zur Erzielung einer solchen möglichst vollständigen Modenmischung wird das auf das Referenzobjekt auftreffende und von diesem zurückgeworfene Impulslichtbündel energetisch gedämpft. Auf eine geometrische Teilung wird somit verzichtet, um das Modenrauschen zu vermeiden. Bei der in der Praxis bevorzugten Ausführungsform wird das vorzugsweise außerhalb eines definierten überwachten Abtastwinkelbereichs angeordnete Referenzobjekt von einem mit sich kontinuierlich ändernden Winkeln abgelenkten Sende-Impulslichtbündel überstrichen. Um insbesondere eine möglichst große Anzahl von Amplituden nachbilden zu können, ist vorgesehen, daß sich der Dämpfungsgrad in Abtastrichtung ändert.

Gemäß einer besonders einfach herstellbaren Ausführungsform ist das Referenzobjekt durch einen gespritzten Kunststoffkörper mit entsprechend verspiegelten Flächen gebildet. Gegebenenfalls können somit auch mehrere Tripelelemente zu einem solchen Kunststoffspritzteil zusammengefaßt werden.

Bei der in der Praxis bevorzugten Ausführungsform ist das Referenzobjekt so angeordnet und ausgelegt, daß ein vom Impulslaser aussgesendetes, durch die Lichtablenkeinrichtung auf das Referenzobjekt gelenktes Impulsbündel aus der Mittenabschattung der Sendeoptik heraus zu sich parallel versetzt und unter Aufrechterhaltung seines Gesamtquerschnitts zurückgeworfen wird. Nachdem somit der Gesamtquerschnitt des ausgesendeten Lichtes auch wieder empfangen wird, wird eine erwünschte vollständige Modenmischung erreicht.

Bei einer sich entlang eines zur Drehachse der drehbaren Lichtablenkeinheit konzentrischen Kreisbogens erstreckenden Lichteintritts- und Lichtaustrittsfläche ändert sich der Dämpfungsgrad vorzugsweise entlang dieses Kreisbogens. Das Impulslichtbündel erfährt somit während seiner das Referenzobjekt überstreichenden Abtastbewegung eine unterschiedliche Dämpfung, so daß insbesondere unterschiedliche Amplituden nachgebildet und entsprechend auch unterschiedliche Laufzeitmeßfehler kompensiert werden können.

Von besonderem Vorteil ist, wenn sich der Dämpfungsgrad in Abtastrichtung bzw. entlang des Kreisbogens kontinuierlich ändert. Damit ist es grundsätzlich möglich, sämtliche auch in der Praxis während einer jeweiligen Abstandsmessung auftretende Amplituden nachzubilden, so daß im Ergebnis über die entsprechend erstellten Korrekturtabellen oder Korrekturfunktionen eine genaue Kompensation der jeweiligen Laufzeitmeßfehler gewährleistet ist.

Bei einer in der Praxis bevorzugten Ausführungsform ist das Referenzobjekt mit wenigstens einem Dämpfungsfilter versehen. Dieses ist in Ausbreitungsrichtung des einfallenden Sende-Impulslichtbündels betrachtet vorzugsweise vor dem wenigstens einen Tripelelement angeordnet, wobei es zweckmäßigerweise im Bereich der Lichteintritts- und Lichtaustrittsfläche des Referenzobjekts vorgesehen ist.

Dieses Dämpfungsfilter kann sich entsprechend der Lichteintritts- und Lichtaustrittsfläche des Referenzobjektes wiederum entlang eines zur Drehachse der drehbaren Lichtablenkeinheit konzentrischen Kreisbogens erstrecken.

Bei der in der Praxis bevorzugten Ausführungsform ist das Dämpfungsfilter ein zweckmäßigerweise wellenlängenunabhängiges Absorptionsfilter. Der Vorteil einer Absorption liegt darin, daß das Licht energetisch gedämpft und nicht geometrisch geteilt wird. Dadurch wird das Problem eines Modenrauschens vermieden.

Um zwischen einem minimalen und einem maximalen Empfangspegel möglichst viele Zwischenwerte zu erhalten, ist das Dämpfungsfilter vorteilhafterweise als Verlaufsfilter mit einer sich in Abtastrichtung bzw. entlang des Kreisbogens kontinuierlich ändernden optischen Dämpfung ausgebildet. Bei unterschiedlichen Winkelstellungen einer drehbaren Photoempfangsanordnung ergeben sich somit unterschiedliche Dämpfungsgrade.

Dabei besitzt das Dämpfungsfilter vorteilhafterweise einen von einer optischen Dichte D = 0 bis insbesondere D = 4 und vorzugsweise von D = 0 bis D = 3,7 reichenden Dämpfungsverlauf, wobei die Dichtewerte für einen einfachen Filterdurchlauf angegeben sind. Bei der in der Praxis bevorzugten Ausführungsform wird das dem Referenzobjekt zugeordnete Dämpfungsfilter sowohl vom einfallenden als auch vom ausfallenden Licht durchlaufen, wobei das Dämpfungsfilter dann vorzugsweise einen von einer optischen Gesamtdichte D = 0 bis insbesondere D = 8 und insbesondere D = 0 bis D = 7,4 reichenden Gesamtdämpfungsverlauf besitzt. Somit wird durch das Dämpfungsfilter sowohl das einfallende als auch das ausfallende Licht gedämpft, wobei die beiden Dämpfungswerte gleich groß sind. Das Dämpfungsfilter kann vorteilhafterweise als Folienfilter ausgebildet sein. Dieses kann ggf. konzentrisch zur Drehachse der Photoempfangsanordnung gekrümmt sein.

Von besonderem Vorteil ist es, wenn das Referenzobjekt mit Positionier- und/oder Fixiermitteln versehen ist, um das Dämpfungsfilter am Referenzobjekt zu positionieren bzw. zu fixieren.

Der jeweilige Dämpfungsgrad kann zumindest teilweise aber auch durch eine entsprechend herabgesetzte Reflektivität wenigstens einer Spiegelfläche eines jeweiligen Tripelelements bestimmt sein, wobei die jeweilige Spiegelfäche beispielsweise auch aufgerauht sein kann.

In den Unteransprüchen sind weitere vorteilhafte Ausführungsvarianten der erfindungsgemäßen Laserabstandsermittlungsvorrichtung und des erfindungsgemäßen Referenzobjekts angegeben.

Aufgrund der Erfindung ist es somit insbesondere möglich, sämtliche in der Praxis interessierende Signalamplituden von der kleinsten detektierbaren Amplitude bis zur größten, zu einer maximalen Übersteuerung des der Photoempfangsanordnung nachgeschalteten Empfängers führenden Amplitude zu simulieren. Wesentlich ist auch, daß die optische Weglänge vom Sender über die Sendeoptik und die beispielsweise ein Spiegelrad umfassende Lichtablenkeinheit zum Referenzobjekt und zurück über die Lichtablenkeinheit und die Empfangsoptik zum Empfänger von der simulierten Amplitude des Empfangssignals unabängig ist. Die unter Verwendung des Referenzobjekts erfolgende Simulation erfolgt stets bei bekannter und konstanter optischer Weglänge. Im Ergebnis können somit sehr genaue Korrekturtabellen und/oder -funktionen erstellt werden, die in Abhängigkeit von der Signalamplitude auch ständig nachkalibriert werden können. Mit Hilfe der entsprechenden Korrekturtabelle bzw. Korrekturfunktion kann dann die Entfernung der jeweiligen Objekte praktisch unabhängig von deren jeweiligem Reflexionsverhalten genau gemessen werden. Das Tripelelement kann insbesondere auch als Hohltripel bzw. Mehrfachhohltripel ausgebildet werden, bei dem keine Brechung auftritt. Auch bei der Verwendung mehrerer konzentrisch zur Drehachse der Photoempfangsanordnung angeordneter Tripelelemente ist sichergestellt, daß kein Zwischenbild entsteht. Eine genaue Justierung der Tripelanordnung ist nicht erforderlich.

Die Erfindung wird im folgenden anhand von Ausführungsbeispielen unter Bezugnahme auf die Zeichnung näher erläutert; in dieser zeigen:
- Figur 1: in schematischer Ansicht den Grundaufbau einer als Laserradar verwirklichten Laerabstandsermittlungsvorrichtung,
- Figur 2: ein praktisches Ausführungsbeispiel einer solchen Laserabstandsermittlungsvorrichtung,
- Figur 3: eine perspektivische Ansicht eines in der Laserabstandsermittlungsvorrichtung gemäß Figur 1 bzw. 2 verwendeten Referenzobjekts,
- Figur 4: eine Vorderansicht des in Figur 3 gezeigten Referenzobjekts in Richtung des einfallenden Lichtes,
- Figur 5: eine Seitenansicht des Referenzobjekts,
- Figur 6: eine Schnittansicht des Referenzobjekts, geschnitten entlang der Linie B-B in Figur 5,
- Figur 7: eine Ansicht des Referenzobjekts von unten und
- Figur 8: eine Schnittansicht des Referenzobjekts, geschnitten entlang der Linie A-A in Figur 7.

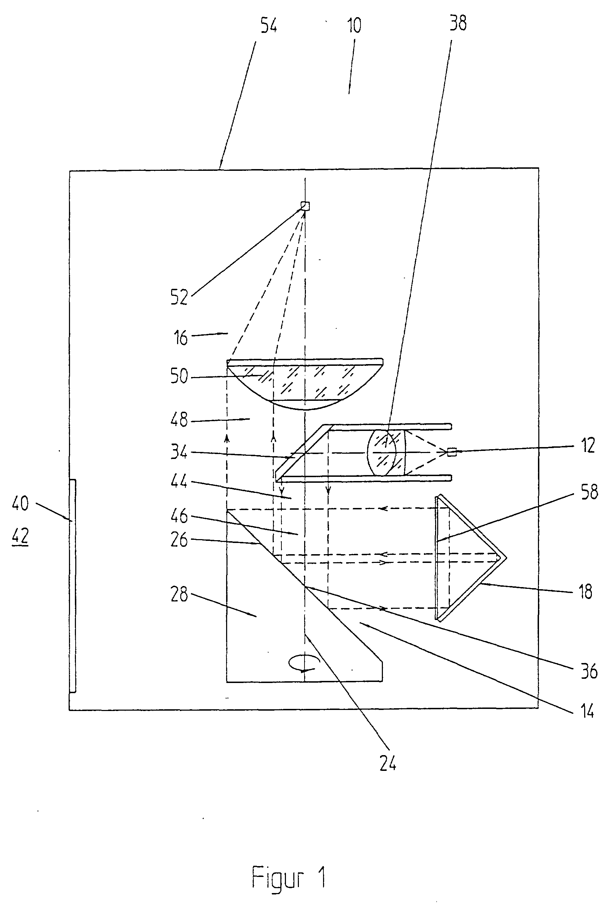

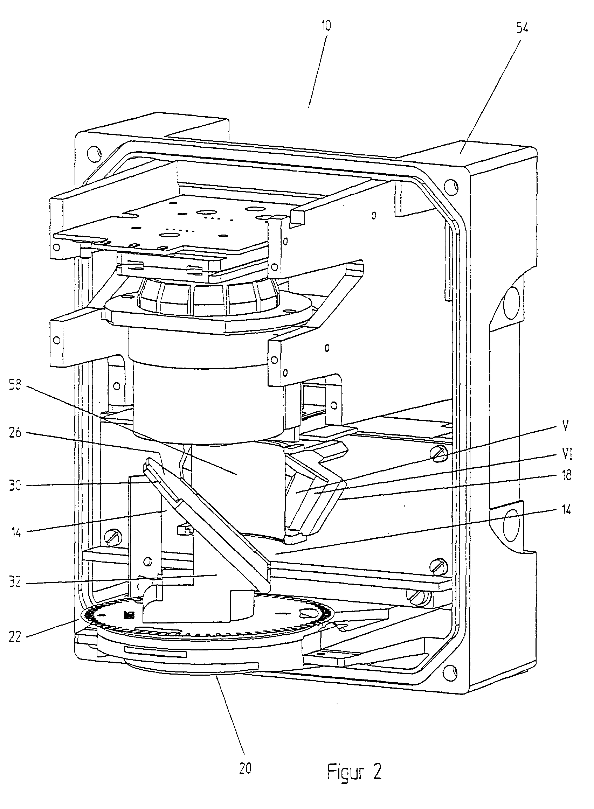

Gemäß dem sich aus den Figuren 1 und 2 ergebenden Grundaufbau umfaßt die Laserabstandsermittlungsvorrichtung 10 einen Impulslaser 12, eine Lichtablenkeinrichtung 14, eine Photoempfangsanordnung 16 und ein in definiertem Abstand von der Lichtablenkeinrichtung 14 angeordnetes Referenzobjekt 18.

Ein Motor 20 (vgl. Figur 2) treibt einen horizontalen Drehteller 22 zu einer kontinuierlichen Umlaufbewegung um eine vertikale Achse 24 (vgl. Figur 1) an. Am Umfang des Drehtellers 22 kann ein beispielsweise als Gabellichtschranke ausgebildeter Winkelgeber vorgesehen sein, der mit einer Steuerund Auswerteelektronik verbunden ist.

Die Lichtablenkeinrichtung 14 umfaßt einen Drehspiegel 26, der durch die obere Stirnfläche eines Kreiszylinderkörpers 28 (vgl. Figur 1) oder auch an einer Spiegelplatte 30 (vgl. Figur 2) ausgebildet sein kann. Nach Figur 2 ist die Spiegelplatte 30 über einen Spiegelträger 32 auf dem Drehteller 22 befestigt.

Oberhalb des Drehspiegels 26 ist ein wesentlich schmaler ausgebildeter, ebenfalls planer Umlenkspiegel 34 angeordnet, dessen Spiegelfläche einen Winkel von 45° zur Drehachse 24 aufweist und beispielsweise wiederum als Kreiszylinderkörper oder als ebene Spiegelplatte ausgebildet sein kann.

Ein zentraler Bereich 36 des Drehspiegels 26 empfängt über eine Sendelinse 38 Licht des Impulslasers 12. Das zunächst horizontale Lichtbündel wird am Umlenkspiegel 34 nach unten umgelenkt, um dann vom Drehspiegel 26 in horizontaler Richtung umgelenkt zu werden. In Figur 1 nimmt der Drehspiegel 26 eine solche Drehstellung ein, daß das Licht auf das Referenzobjekt 18 gerichtet wird. Demgegenüber ist der Drehspiegel während einer jeweiligen Entfernungsmesseung so ausgerichtet, daß das Licht durch eine Frontscheibe 40 hindurch in einen Meßbereich 42 gerichtet wird. Befindet sich nun in diesem Meßbereich 42 ein Objekt, dessen Abstand zu ermitteln ist, so gelangt von diesem Objekt in der Regel Streulicht durch die Frontscheibe 40 im Sinne eines Autokollimationsstrahlengangs zurück zum Drehspiegel 26.

Während das Sende-Impulslichtbündel 44 mit seinem Mitteneinfallslichtstrahl 46 auf den zentralen Bereich 36 des Drehspiegels 26 auftrifft und dort in Horizontalrichtung umgelenkt wird, gelangt das von einem im Meßbereich 42 befindlichen Objekt oder von dem Referenzobjekt 18 stammende Empfangs-Impulslichtbündel 48 über denselben Drehspiegel 26 zu einer Empfängerlinse 50, durch die das Empfangslicht auf einen Photoempfänger 52 konzentriert wird.

Der Drehspiegel 26, der Drehteller 22 und der Motor 20 sind Teil der Lichtablenkeinrichtung 14, die das Sende-Impulslichtbündel 44 und das Empfangs-Impulslichtbündel 48 um die Drehachse 24 herum rotieren läßt.

Das Referenzobjekt 18 ist im Gehäuse 54 der Lichtabstandsermittlungsvorrichtung 10 integriert.

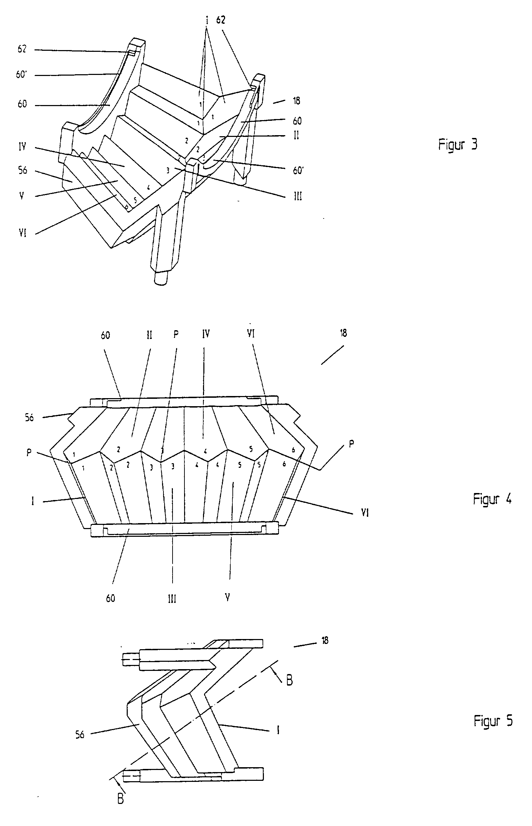

Wie sich insbesondere aus den Figuren 3 bis 8 ergibt, umfaßt das Referenzobjekt 18 mehrere, im vorliegenden Fall sechs Tripelelemente I - VI aus jeweils drei in einem Winkel α, β von 90° zueinander angeordneten Spiegelflächen I₁ - VI₆.

Die Tripelelemente I - VI sind jeweils als Hohltripel ausgebildet, wobei sie im eingebauten Zustand des Referenzobjekts 18 (siehe insbesondere Figur 2) jeweils durch zwei unten liegende Spiegelflächen und eine oben liegende Spiegelfläche gebildet sind.

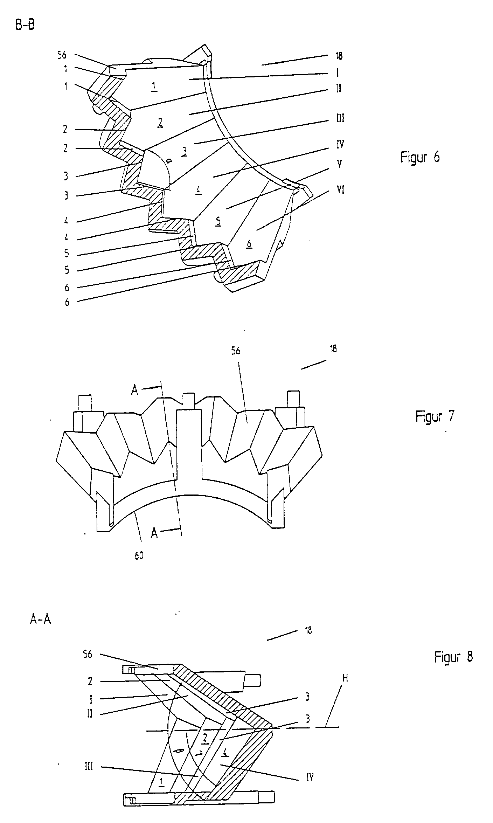

Der zwischen den beiden unteren Spiegelflächen eines jeweiligen Tripelelements gebildete Winkel ist in Figur 6 mit α angegeben. In Figur 8 ist der Winkel zwischen der oberen Spiegelfläche und einer unteren Spiegelfläche eines jeweiligen Tripelelements mit β bezeichnet. Derselbe Winkel β liegt auch zwischen der oberen Spiegelfläche und der anderen unteren Spiegelfläche vor. Diese beiden Winkel α und β betragen für sämtliche Tripelelemente I - VI jeweils 90°. Zudem kann Figur 8 entnommen werden, daß im vorliegenden Fall die unteren Spiegelflächen mit der Horizontalen H jeweils einen Winkel γ von etwa 55° einschließen.

Die sechs Tripelelemente I - VI des Referenzobjekts 18 liegen auf einem zur Drehachse 24 (vgl. Figur 1) der drehbaren Lichtablenkeinrichtung 14 konzentrischen Kreisbogen, wobei die Anordnung so getroffen ist, daß die innenliegenden, jeweils durch den Schnittpunkt der betreffenden drei Spiegelflächen gebildeten Eckpunkte P (vgl. insbesondere Figur 4) des als Mehrfachhohltripel ausgebildeten Referenzobjekts 18 auf einem solchen zur Drehachse 24 konzentrischen Kreisbogen angeordnet sind.

Im vorliegenden Fall ist das Referenzobjekt 18 durch einen gespritzten Kunststoffkörper 56 mit entsprechend verspiegelten Flächen gebildet. Damit sind alle sechs Tripelelemente I - VI in einem einzigen solchen Kunststoffkörper zusammengefaßt.

Wie am besten anhand der Figur 1 zu erkennen ist, ist das Referenzobjekt 18 so angeordnet und ausgebildet, daß ein vom Impulslaser 12 ausgesendetes, durch die Lichtablenkeinrichtung 14 auf das Referenzobjekt 18 gelenktes Impulslichtbündel 44 aus der Mittenabschattung der Sendeoptik heraus zu sich parallel versetzt und unter Aufrechterhaltung seines Gesamtquerschnitts zurückgeworfen wird. Hierbei wird das außerhalb des definierten überwachten Abtastwinkelbereichs, d.h. außerhalb des Meßbereichs 42 angeordnete Referenzobjekt 18 vom mit sich kontinuierlich ändernden Winkeln abgelenkten Sende-Impulslichtbündel 44 überstrichen.

Das auf das Referenzobjekt 18 auftreffende und von diesem zurückgeworfene Impulslichtbündel 44, 48 wird energetisch gedämpft, wobei sich der Dämpfungsgrad in Abtastrichtung kontinuierlich ändert.

Dazu ist das Referenzobjekt 18 mit einem Dämpfungsfilter 58 versehen, das in Ausbreitungsrichtung des einfallenden Sende-Impulslichtbündels 44 betrachtet vor den Tripelelementen I-VI angeordnet ist. Im vorliegenden Fall ist dieses Dämpfungsfilter 58 im Bereich der Lichteintritts- und Lichtaustrittsfläche des als Mehrfachhohltripel ausgebildeten Referenzobjekts 18 angeordnet (vgl. Figuren 1 und 2). Entsprechend der Lichteintritts- und Lichtaustrittsfläche des Referenzobjekts 18 erstreckt sich auch das Dämpfungsfilter 58 entlang eines zur Drehachse 24 der drehbaren Lichtablenkeinrichtung 14 konzentrischen Kreisbogens.

Im vorliegenden Fall ist das Dämpfungsfilter 58 ein wellenlängenunabhängiges Absorptionsfilter, das wiederum als Verlaufsfilter mit einer sich in Abtastrichtung bzw. entlang des zur Drehachse 24 konzentrischen Kreisbogens kontinuierlich ändernden optischen Dämpfung ausgebildet ist.

Beim vorliegenden Ausführungsbeispiel besitzt das Dämpfungsfilter 58 einen von einer optischen Dichte D = 0 bis insbesondere D = 4 und vorzugsweise von D = 0 bis D = 3,7 reichenden Dämpfungsverlauf, wobei diese Dichtewerte für einen einfachen Filterdurchlauf angegeben sind. Im vorliegenden Fall wird das dem Referenzobjekt 18 zugeordnete Dämpfungsfilter 58 sowohl vom einfallenden als auch vom ausfallenden Licht durchlaufen, so daß es einen von einer optischen Gesamtdichte D = 0 bis insbesondere D = 8 und insbesondere von D = 0 bis D = 7,4 reichenden Gesamtdämpfungsverlauf besitzt. Zudem ist das Dämpfungsfilter 58 im vorliegenden Fall als Folienfilter ausgebildet.

Wie insbesondere anhand der Figuren 3 und 4 zu erkennen ist, ist das Referenzobjekt 18 mit Positionier- und Fixiermitteln 60 versehen, um das Dämpfungsfilter 58 am Referenzobjekt 18 zu positionieren bzw. zu fixieren. Diese Positionier- und Fixiermittel 60 umfassen eine Anlagekante 60', an die das folienartige Dämpfungsfilter 58 unter Erzeugung der erforderlichen Krümmung konzentrisch zur Drehachse 24 anlegbar ist. An den Enden der einem zur Drehachse 24 konzentrischen Kreisbogen folgenden Anlagekanten 60' diese Positionier- und Fixiermittel 60 mit Klemmitteln 62 (siehe insbesondere Figur 3) versehen, an denen die Enden des folienartigen Dämpfungsfilters 58 festklemmbar sind.

Wie insbesondere anhand von Figur 1 zu erkennen ist, trifft das vom Referenzobjekt 18 zur Lichtablenkeinrichtung 14 zurückgeworfene Licht parallel auf die Empfangslinse 50 auf, so daß ein im Unendlichen liegendes Referenzobjekt simuliert wird. Dadurch wird ein scharfes Bild im Brennpunkt erzeugt. Nachdem der Gesamtquerschnitt des ausgesendeten Impulslichtbündels auch wieder empfangen wird, wird eine vollständige Modenmischung erzielt. Trotz des Verlaufs des Referenzobjekts 18 entlang eines zur Drehachse 24 der Lichtablenkeinrichtung 14 konzentrischen Kreisbogens tritt keinerlei Zwischenbild auf. Eine genaue Justierung des Referenzobjekts ist nicht mehr erforderlich. Das Licht wird durch das Referenzobjekt 18 zu sich parallel versetzt und stets genau dahin zurück reflektiert, wo es herkommt. Durch eine entsprechende Abstufung des folienartigen Dämpfungsfilters 58 kann grundsätzlich der gesamte Dynamikbereich abgedeckt werden. Nachdem das dem Referenzobjekt 18 zugeordnete Dämpfungsfilter 58 sowohl vom einfallenden als auch vom ausfallenden Licht durchlaufen wird, ergibt sich eine doppelte Dämpfung. Mit den entsprechenden Referenzmessungen können schließlich äußerst genaue Korrekturtabellen und/oder Korrekturfunktionen erstellt werden, die zudem ständig auch nachjustierbar sind.

### Bezugszeichenliste

- 10: Lichtabstandsermittlungsvorrichtung
- 12: Impulslaser
- 14: Lichtablenkeinrichtung
- 16: Photoempfangsanordnung
- 18: Referenzobjekt
- 20: Motor
- 22: Drehteller
- 24: Drehachse
- 26: Drehspiegel
- 28: Kreiszylinderkörper
- 30: Spiegelplatte
- 32: Spiegelträger
- 34: Umlenkspiegel
- 36: zentraler Bereich
- 38: Sendelinse
- 40: Frontscheibe
- 42: Meßbereich
- 44: Sende-Impulslichtbündel
- 46: Mitteneinfallslichtstrahl
- 48: Empfangs-Impulslichtbündel
- 50: Empfängerlinse
- 52: Photoempfänger
- 54: Gehäuse
- 56: Kunststoffkörper
- 58: Dämpfungsfilter
- 60: Positionier- und Fixiermittel
- 60': Anlagekante
- I: Tripelelement
- II: Tripelelement
- III: Tripelelement
- IV: Tripelelement
- V: Tripelelement
- VI: Tripelelement
- I₁: Spiegelflächen
- II₂: Spiegelflächen
- III₃: Spiegelflächen
- IV₄: Spiegelfächen
- V₅: Spiegelflächen
- VI₆: Spiegelfächen
- H: Horizontale
- P: Eckpunkte
- α: Winkel
- β: Winkel
- γ: Winkel

## Patentansprüche

1. Laserabstandsermittlungsvorrichtung (10) mit einem Impulslaser (12), einer Lichtablenkeinrichtung (14), einer Photoempfangsanordnung (16) und einem in definiertem Abstand von der Lichtablenkeinrichtung (14) angeordneten Referenzobjekt (18),
dadurch **gekennzeichnet**,
daß das Referenzobjekt (18) mehrere Tripelelemente (I - VI) aus jeweils drei im Winkel (α, *β*) von 90° zueinander angeordneten Spiegelflächen (I₁ - VI₆) umfaßt, daß die Tripelelemente (I - VI) auf einem zur Drehachse (24) der drehbaren Lichtablenkeinheit (14) konzentrischen Kreisbogen liegen, daß das auf das Referenzobjekt (18) auftreffende und von diesem zurückgeworfene Impulslichtbündel (44, 48) energetisch gedämpft wird und daß sich der Dämpfungsgrad in Abtastrichtung ändert.

2. Laserabstandsermittlungsvorrichtung nach Anspruch 1,
dadurch **gekennzeichnet**,
daß das Referenzobjekt (18) durch einen gespritzten Kunstoffkörper (56) mit entsprechend verspiegelten Flächen gebildet ist.

3. Laserabstandsermittlungsvorrichtung nach Anspruch 1 oder 2,
dadurch **gekennzeichnet**,
daß das Referenzobjekt (18) so angeordnet und ausgelegt ist, daß ein vom Impulslaser (12) ausgesendetes, durch die Lichtablenkeinheit (14) auf das Referenzobjekt (18) gelenktes Impulslichtbündel (44) aus der Mittenabschattung der Sendeoptik heraus zu sich parallel versetzt und unter Aufrechterhaltung seines Gesamtquerschnitts zurückgeworfen wird.

4. Laserabstandsermittlungsvorrichtung nach einem der vorhergehenden Ansprüche,
dadurch **gekennzeichnet,**
daß das vorzugsweise außerhalb eines definierten überwachten Abtastwinkelbereichs (42) angeordnete Referenzobjekt (18) von einem mit sich kontinuierlich ändernden Winkeln abgelenkten Sende-Impulslichtbündel (44) überstrichen wird.

5. Laserabstandsermittlungsvorrichtung nach einem der vorhergehenden Ansprüche,
dadurch **gekennzeichnet,**
daß sich die Lichteintritts- und Lichtaustrittsfläche des Referenzobjekts (18) entlang eines zur Drehachse (24) der drehbaren Lichtablenkeinheit (14) konzentrischen Kreisbogens erstreckt und daß sich der Dämpfungsgrad entlang dieses Kreisbogens ändert.

6. Laserabstandsermittlungsvorrichtung nach einem der vorhergehenden Ansprüche,
dadurch **gekennzeichnet**,
daß sich der Dämpfungsgrad in Abtastrichtung bzw. entlang des Kreisbogens kontinuierlich ändert.

7. Laserabstandsermittlungsvorrichtung nach einem der vorhergehenden Ansprüche,
dadurch **gekennzeichnet**,
daß das Referenzobjekt (18) mit wenigstens einem Dämpfungsfilter (58) versehen ist, wobei insbesondere das Dämpfungsfilter (58) in Ausbreitungsrichtung des einfallenden Sende-Impulslichtbündels (44) betrachtet vor dem wenigstens einen Tripelelement (I - VI) angeordnet ist und vorzugsweise das Dämpfungsfilter (58) im Bereich der Lichteintritts- und Lichtaustrittsfläche des Referenzobjekts (18) angeordnet ist.

8. Laserabstandsermittlungsvorrichtung nach Anspruch 7,
dadurch **gekennzeichnet**,
daß sich das Dämpfungsfilter (58) entsprechend der Lichteintrittsund Lichtaustrittsfläche des Referenzobjekts (18) entlang eines zur Drehachse (24) der drehbaren Lichtablenkeinheit (14) konzentrischen Kreisbogens erstreckt.

9. Laserabstandsermittlungsvorrichtung nach einem der Ansprüche 7 oder 8,
dadurch **gekennzeichnet**,
daß das Dämpfungsfilter (58) ein vorzugsweise wellenlängenunabhängiges Absorptionsfilter ist.

10. Laserabstandsermittlungsvorrichtung nach einem der Ansprüche 7-9,
dadurch **gekennzeichnet**,
daß das Dämpfungsfilter (58) als Verlaufsfilter mit einer sich in Abtastrichtung bzw. entlang des Kreisbogens kontinuierlich ändernden optischen Dämpfung ausgebildet ist, wobei insbesondere das Dämpfungsfilter (58) einen von einer optischen Dichte D = 0 bis insbesondere D = 4 und vorzugsweise von D = 0 bis D = 3,7 reichenden Dämpfungsverlauf besitzt, wobei die Dichtewerte für einen einfachen Filterdurchlauf angegeben sind.

11. Laserabstandsermittlungsvorrichtung nach einem der Ansprüche 7-10,
dadurch **gekennzeichnet**,
daß das dem Referenzobjekt (18) zugeordnete Dämpfungsfilter (58) sowohl vom einfallenden als auch vom ausfallenden Licht durchlaufen wird und vorzugsweise einen von einer optischen Gesamtdichte D = 0 bis insbesondere D = 8 und insbesondere von D = 0 bis D = 7,4 reichenden Gesamtdämpfungsverlauf besitzt.

12. Laserabstandsermittlungsvorrichtung nach einem der Ansprüche 7-11,
dadurch **gekennzeichnet,**
daß das Dämpfungsfilter (58) als Folienfilter ausgebildet ist.

13. Laserabstandsermittlungsvorrichtung nach einem der vorhergehenden Ansprüche,
dadurch **gekennzeichnet**,
daß der jeweilige Dämpfungsgrad zumindest teilweise durch eine entsprechend herabgesetzte Reflektivität wenigstens einer Spiegelfläche (I₁ - VI₆) eines jeweiligen Tripelelements (I - VI) bestimmt ist, wobei insbesondere die jeweilige Spiegelfläche (I₁ - VI₆) aufgerauht ist.

14. Laserabstandsermittlungsvorrichtung nach einem der vorhergehenden Ansprüche,
dadurch **gekennzeichnet**,
daß das Referenzobjekt (18) mit Positionier- und/oder Fixiermitteln (60) versehen ist, um das Dämpfungsfilter (58) am Referenzobjekt (18) zu positionieren bzw. zu fixieren.

15. Referenzobjekt für eine Laserabstandsermittlungsvorrichtung nach einem der vorhergehenden Ansprüche,
dadurch **gekennzeichnet**,
daß es mehrere nebeneinander auf einem Kreisbogen angeordnete Tripelelemente (I - VI) aus jeweils drei im Winkel (*α*, β) von 90° zueinander angeordneten Spiegelflächen (I₁ - VI₆) umfaßt und daß es Mittel (58) zur energetischen Lichtdämpfung umfaßt, wobei sich der Dämpfungsgrad entlang des Kreisbogens ändert.

16. Referenzobjekt nach Anspruch 15,
dadurch **gekennzeichnet**,
daß es durch einen gespritzten Kunstoffkörper (56) mit entsprechend verspiegelten Flächen gebildet ist.

17. Referenzobjekt nach Anspruch 15 oder 16,
dadurch **gekennzeichnet,**
daß es wenigstens ein Dämpfungsfilter (58) umfaßt, das vorzugsweise in Ausbreitungsrichtung des einfallenden Sende-Impulslichtbündels betrachtet vor dem wenigstens einen Tripelelement (I - VI) angeordnet ist.

18. Referenzobjekt nach einem der Ansprüche 15-17,
dadurch **gekennzeichnet**,
daß das Dämpfungsfilter (58) ein vorzugsweise wellenlängenunabhängiges Absorptionsfilter ist.

19. Referenzobjekt nach einem der Ansprüche 15-18,
dadurch **gekennzeichnet,**
daß das Dämpfungsfilter (58) einen von einer optischen Dichte D = 0 bis insbesondere D = 4 und vorzugsweise von D = 0 bis D = 3,7 reichenden Dämpfungsverlauf besitzt, wobei die Dichtewerte für einen einfachen Filterdurchlauf angegeben sind.

20. Referenzobjekt nach einem der Ansprüche 17-19,
dadurch **gekennzeichnet,**
daß das Dämpfungsfilter (58) als Folienfilter ausgebildet ist.

21. Referenzobjekt nach einem der Ansprüche 15-20,
dadurch **gekennzeichnet,**
daß der jeweilige Dämpfungsgrad zumindest teilweise durch eine entsprechend herabgesetzte Reflektivität wenigstens einer Spiegelfläche (I₁ - VI₆) eines jeweiligen Tripelelements (I - VI) bestimmt ist.

22. Referenzobjekt nach einem der Ansprüche 15-21,
dadurch **gekennzeichnet**,
daß es mit Positionier- und/oder Fixiermitteln (60) versehen ist, um das Dämpfungsfilter (58) am Referenzobjekt (18) zu positionieren bzw. zu fixieren.

## Claims

1. Laser range finding apparatus (10) comprising a pulsed laser (12), a light deflection device (14), a photo-receiver arrangement (16) and a reference object (18) arranged at a defined spacing from the light deflecting device (14), characterized in that the reference object (18) includes a plurality of triple elements (I - VI) having three mirror surfaces (I₁ - VI₆) arranged at an angle (α, β) of 90° to one another; in that the triple elements (I - VI) lie on a circular arc concentric to the axis of rotation (24) of the rotatable light deflecting device (14); in that the pulsed light beam (44, 48), which is incident onto the reference object (18) and reflected back from the latter, is energetically attenuated; and in that the degree of attenuation changes in the direction of scanning.

2. Laser range finding apparatus in accordance with claim 1, characterized in that the reference object (18) is formed by an injection molded plastic body (56) with correspondingly mirrored surfaces.

3. Laser range finding apparatus in accordance with claim 1 or claim 2, characterized in that the reference object (18) is so arranged and designed that a pulsed light beam (44) transmitted by the pulsed laser (12) and deflected by the light deflecting device (14) onto the reference object (18) is displaced parallel to itself out of the central shadow of the optical transmitting system and is reflected back while maintaining its total cross-section.

4. Laser range finding apparatus in accordance with any one of the preceding claims, characterized in that the reference object (18) which is preferably arranged outside of a defined, monitored angular scanning range (42), is swept over by a deflected, transmitted pulsed light beam (44) with continuously changing angles.

5. Laser range finding apparatus in accordance with any one of the preceding claims, characterized in that the light entry surface and the light exit surface of the reference object (18) extend along a circular arc concentric to the axis of rotation (24) of the rotatable light deflecting device (14) and in that the degree of attenuation changes along this circular arc.

6. Laser range finding apparatus in accordance with any one of the preceding claims, characterized in that the degree of attenuation changes continuously in the scanning direction or along this circular arc.

7. Laser range finding apparatus in accordance with claim 1, characterized in that the reference object (18) is provided with at least one attenuating filter (58), with in particular the attenuating filter (58) being arranged, when considered in the direction of propagation of the incident transmitted pulsed light beam (44) in front of the at least one triple element (I - VI), and with the attenuating filter (58) preferably being arranged in the region of the light entry surface and light exit surface of the reference object (18).

8. Laser range finding apparatus in accordance with any one of the preceding claims, characterized in that the attenuating filter (58) extends in accordance with the light entry surface and light exit surface of the reference object (18) along a circular arc concentric to the axis of rotation (24) of the rotatable light deflecting device (14).

9. Laser range finding apparatus in accordance with any one of the claims 7 or 8, characterized in that the attenuating filter (58) is a preferably wavelength independent absorption filter.

10. Laser range finding apparatus in accordance with any one of the claims 7 - 9, characterized in that the attenuating filter (58) is formed as a graduated filter having a continuously changing optical attenuation in the scanning direction or along the circular arc, with in particular the attenuating filter (58) having an attenuation graduation ranging from an optical density D = 0 to in particular D = 4 and preferably from D = 0 to D = 3.7, with the density values being given for a single passage through the filter.

11. Laser range finding apparatus in accordance with any one of the claims 7 - 10, characterized in that both the incident light and also the emergent light passes through the attenuating filter (58) associated with the reference object (18) and the attenuating filter (58) preferably has a total attenuation graduation ranging from an optical density D = 0 to in particular D = 8 and preferably from D = 0 to D = 7.4.

12. Laser range finding apparatus in accordance with any one of the claims7 - 11, characterized in that the attenuating filter (58) is formed as a foil filter.

13. Laser range finding apparatus in accordance with any one of the preceding claims, characterized in that the respective degree of attenuation is determined at least partly by a correspondingly reduced reflectivity of at least one mirror surface (I₁ - VI₆) of a respective triple element (I - VI), with in particular the respective mirror surface (I₁ - VI₆) being roughened.

14. Laser range finding apparatus in accordance with any one of the preceding claims, characterized in that the reference object (18) is provided with positioning and/or fixing means (60) in order to position and/or to fix the attenuating filter (58) at the reference object (18).

15. Reference object for a laser range finding apparatus in accordance with any one of the preceding claims, characterized in that it includes a plurality of triple elements (I - VI) each consisting of three mirror surfaces (I₁ - VI₆) arranged at an angle (α, β) of 90° to one another; and in that it includes means (58) for the energetic attenuation of light, with the degree of attenuation changing along the circular arc.

16. Reference object in accordance with claim 15, characterized in that it is formed by an injection molded plastic body (56) with correspondingly mirrored surfaces.

17. Reference object in accordance with claim 15 or claim 16, characterized in that it includes at least one attenuating filter (58), which is preferably arranged in front of the at least one triple element (I - VI) when considered in the direction of propagation of the incident transmitted pulsed light beam.

18. Reference object in accordance with any one of the claims 15 - 17, characterized in that the attenuating filter (58) is a preferably wavelength independent absorption filter.

19. Reference object in accordance with any one of the claims 15 - 18, characterized in that the attenuating filter (58) has an attenuation graduation which ranges from an optical density D = 0 to in particular D = 4 and preferably from D = 0 to D = 3.7, with the density values being given for a single passage through the filter.

20. Reference object in accordance with any one of the claims 17 - 19, characterized in that the attenuating filter (58) is formed as a foil filter.

21. Reference object in accordance with any one of the claims 15 - 20, characterized in that the respective degree of attenuation is determined at least partly by a correspondingly reduced reflectivity of at least one mirror surface (I₁ - VI₆) of a respective triple element (I - VI).

22. Reference object in accordance with any one of the claims 15 - 21, characterized in that it is provided with positioning means and/or fixing means (60) in order to position and/or fix the attenuating filter (58) at the reference object (18).

## Revendications

1. Télémètre laser (10) comportant un laser impulsionnel (12), un déviateur de lumière (14), un photodétecteur (16) et un objet de référence (18) agencé à une distance déterminée du déviateur de lumière (14),
**caractérisé en ce que** l'objet de référence (18) comprend plusieurs éléments triples (I à VI) composés chacun de trois surfaces réfléchissantes (I₁ à VI₆) agencées selon un angle (α, β) de 90° les unes par rapport aux autres, en ce que les éléments triples (I à VI) se trouvent sur un arc de cercle concentrique par rapport à l'axe de rotation (24) du déviateur de lumière rotatif (14), en ce que le faisceau de lumière impulsionnelle (44, 48) arrivant sur l'objet de référence (18) et renvoyé par celui-ci subit une atténuation énergétique et en ce que le degré d'atténuation varie dans la direction d'analyse.

2. Télémètre laser selon la revendication 1,
**caractérisé en ce que** l'objet de référence (18) est formé par un corps plastique extrudé (56) avec des surfaces réfléchissantes appropriées.

3. Télémètre laser selon la revendication 1 ou 2,
**caractérisé en ce que** l'objet de référence (18) est agencé et conçu de telle sorte qu'un faisceau de lumière impulsionnelle (44) émis par un laser impulsionnel (12) et dévié par le déviateur de lumière (14) sur l'objet de référence (18) est renvoyé déplacé hors de l'occultation centrale de l'optique d'émission parallèlement à lui-même et en gardant sa section transversale totale.

4. Télémètre laser selon l'une des revendications précédentes,
**caractérisé en ce que** l'objet de référence (18) agencé de préférence en dehors d'une zone angulaire d'analyse déterminée et surveillée (42) est balayé par un faisceau de lumière impulsionnelle émis (44) dévié selon des angles variant de façon continue.

5. Télémètre laser selon l'une des revendications précédentes,
**caractérisé en ce que** la surface d'entrée et de sortie de lumière de l'objet de référence (18) s'étend le long d'un arc de cercle concentrique par rapport à l'axe de rotation (24) du déviateur de lumière rotatif (14) et en ce que le degré d'atténuation varie le long de cet arc de cercle.

6. Télémètre laser selon l'une des revendications précédentes,
**caractérisé en ce que** le degré d'atténuation varie de façon continue dans la direction d'analyse ou le long de l'arc de cercle.

7. Télémètre laser selon l'une des revendications précédentes,
**caractérisé en ce que** l'objet de référence (18) est muni d'au moins un filtre d'atténuation (58), lequel filtre d'atténuation (58) est agencé en particulier, vu dans la direction de propagation du faisceau de lumière impulsionnelle émis (44) incident, avant le, au moins un des éléments triples (I à VI) et lequel filtre d'atténuation (58) est agencé de préférence dans la zone de la surface d'entrée et de sortie de lumière de l'objet de référence (18) .

8. Télémètre laser selon la revendication 7,
**caractérisé en ce que** le filtre d'atténuation (58) s'étend, selon la surface d'entrée et de sortie de lumière de l'objet de référence (18), le long d'un arc de cercle concentrique par rapport à l'axe de rotation (24) du déviateur de lumière rotatif (14).

9. Télémètre laser selon l'une des revendications 7 ou 8,
**caractérisé en ce que** le filtre d'atténuation (58) est un filtre d'absorption dépendant de préférence de la longueur d'onde.

10. Télémètre laser selon l'une des revendications 7 à 9,
**caractérisé en ce que** le filtre d'atténuation (58) est conçu comme un filtre dégradé avec une atténuation optique variant dans la direction d'analyse ou le long de l'arc de cercle, le filtre d'atténuation (58) ayant notamment une courbe d'atténuation allant d'une densité optique D = 0 à notamment D = 4 et de préférence de D = 0 à D = 3,7, les valeurs de densité étant données pour un seul passage à travers le filtre.

11. Télémètre laser selon l'une des revendications 7 à 10,
**caractérisé en ce que** le filtre d'atténuation (58) associé à l'objet de référence (18) est traversé aussi bien par la lumière incidente que par la lumière émergente et en ce qu'il a de préférence une courbe d'atténuation totale allant d'une densité totale optique D = 0 à notamment D = 8 et notamment de D = 0 à D = 7,4.

12. Télémètre laser selon l'une des revendications 7 à 11,
**caractérisé en ce que** le filtre d'atténuation (58) est conçu comme un filtre à film.

13. Télémètre laser selon l'une des revendications précédentes,
**caractérisé en ce que** le degré d'atténuation respectif est déterminé au moins en partie par une réflectivité, diminuée de manière correspondante, d'au moins une surface réfléchissante (I₁ à VI₆) d'un élément triple respectif (I à VI), la surface réfléchissante (I₁ à VI₆) respective étant notamment rendue rugueuse.

14. Télémètre laser selon l'une des revendications précédentes,
**caractérisé en ce que** l'objet de référence (18) est muni de moyens de positionnement et/ou de fixation (60) pour positionner ou fixer le filtre d'atténuation (58) sur l'objet de référence (18).

15. Objet de référence pour un télémètre laser selon l'une des revendications précédentes,
**caractérisé en ce qu'**il comprend plusieurs éléments triples (I à VI) qui sont agencés les uns à côté des autres sur un arc de cercle et qui sont composés chacun de trois surfaces réfléchissantes (I₁ à VI₆) agencées selon un angle (α, β) de 90° les unes par rapport aux autres et en ce qu'il comprend des moyens (58) pour l'atténuation énergétique de la lumière, le degré d'atténuation variant le long de l'arc de cercle.

16. Objet de référence selon la revendication 15,
**caractérisé en ce qu**'il est formé par un corps plastique extrudé (56) avec des surfaces réfléchissantes appropriées.

17. Objet de référence selon la revendication 15 ou 16,
**caractérisé en ce qu**'il comprend au moins un filtre d'atténuation (58) qui est agencé de préférence, vu dans la direction de propagation du faisceau de lumière impulsionnelle émis incident, avant le au moins un des éléments triples (I à VI).

18. Objet de référence selon l'une des revendications 15 à 17,
**caractérisé en ce que** le filtre d'atténuation (58) est un filtre d'absorption dépendant de préférence de la longueur d'onde.

19. Objet de référence selon l'une des revendications 15 à 18,
**caractérisé en ce que** le filtre d'atténuation (58) a une courbe d'atténuation allant d'une densité optique D = 0 à notamment D = 4 et de préférence de D = 0 à D = 3,7, les valeurs de densité étant données pour un seul passage à travers le filtre.

20. Objet de référence selon l'une des revendications 17 à 19,
**caractérisé en ce que** le filtre d'atténuation (58) est conçu comme un filtre à film.

21. Objet de référence selon l'une des revendications 15 à 20,
**caractérisé en ce que** le degré d'atténuation respectif est déterminé au moins en partie par une réflectivité, diminuée de manière correspondante, d'au moins une surface réfléchissante (I₁ à VI₆) d'un élément triple respectif (I à VI).

22. Objet de référence selon l'une des revendications 15 à 21,
**caractérisé en ce qu**'il est muni de moyens de positionnement et/ou de fixation (60) pour positionner ou fixer le filtre d'atténuation (58) sur l'objet de référence (18).
